# EUROPÄISCHE PATENTSCHRIFT

(11) **EP 4 017 747 B1**
(45) Veröffentlichungstag und Bekanntmachung des Hinweises auf die Patenterteilung: **26.02.2025**
(21) Anmeldenummer: 20760424.0
(22) Anmeldetag: 18.08.2020
(51) Int. Cl.: B60K 11/08, B60K 11/04

(54) **KÜHLEINRICHTUNG FÜR EIN FRONTEND EINES KRAFTFAHRZEUGS, KRAFTFAHRZEUG**
COOLING DEVICE FOR A FRONT END OF A MOTOR VEHICLE, AND MOTOR VEHICLE
DISPOSITIF DE REFROIDISSEMENT POUR UNE EXTRÉMITÉ AVANT D'UN VÉHICULE AUTOMOBILE ET VÉHICULE AUTOMOBILE

(30) Priorität: 22.08.2019 DE 102019212551
(43) Veröffentlichungstag der Anmeldung: 29.06.2022
(73) Patentinhaber: VOLKSWAGEN AKTIENGESELLSCHAFT, 38440 Wolfsburg (DE)
(72) Erfinder: MRUSEK, Falk, 38176 Wendeburg (DE); SCHWARZ, Johannes, 38524 Sassenburg (DE); FREVERT, Martin, 29378 Wittingen (DE)
(74) Vertreter: Clarenbach, Carl-Philipp
(86) Internationale Anmeldenummer: PCT/EP2020/073134
(87) Internationale Veröffentlichungsnummer: WO 2021/032756

(56) Entgegenhaltungen:
- EP-A1- 3 435 020
- EP-A1- 3 457 071
- WO-A1-2016/059766
- DE-A1- 102012 109 503
- DE-A1- 102015 010 102
- DE-A1- 102018 108 162
- DE-B3- 102014 002 533
- DE-C1- 3 446 950
- GB-A- 2 479 044

## Beschreibung

Die Erfindung betrifft eine Kühleinrichtung für ein Frontend eines Kraftfahrzeugs, mit zumindest einem Wärmetauscher, der eine Vielzahl von luftumströmbaren Kühlmittelkanälen aufweist, und mit einer dem Wärmetauscher vorgeschalteten Vorrichtung, die einen Trägerrahmen mit einer Durchströmungsöffnung für einen Luftstrom zu dem Wärmetauscher und zumindest ein an dem Trägerrahmen beweglich gelagertes Schließelement zum Freigeben, teilweise Freigeben und Verschließen der Durchströmungsöffnung aufweist.

Weiterhin betrifft die Erfindung ein Kraftfahrzeug mit der vorstehend beschriebenen Kühleinrichtung.

Kühleinrichtungen der eingangs genannten Art sind aus dem Stand der Technik bekannt. So beschreibt die Offenlegungsschrift EP 2 602 144 A1 ein Fahrzeugfrontend mit einem Kühlerbereich und einer vor dem Kühlerbereich angeordneten Luftklappeneinrichtung mit einem Trägerrahmen und darin eingesetzten, zur Regulierung eines Luftstroms schwenkbaren Lamellen. Durch das Verstellen der Lamellen ist es möglich, den einem Wärmetauscher zugeführten Luftstrom zu beschränken, zu verhindern oder freizugeben. Dadurch ist es möglich, Strömungsverluste, die beim Durchströmen des Motorraums oder beim Umströmen des Wärmetauschers entstehen, zu vermeiden, wenn der Luftstrom zur Kühlung nicht benötigt wird. Dies bietet beispielsweise Vorteile in Bezug auf den cW-Wert des die Kühleinrichtung aufweisenden Kraftfahrzeugs. Durch vollständiges Verschließen der Durchströmungsöffnung wird beispielsweise eine gezielte Luftführung des Fahrtwindes an dem Kraftfahrzeugs vorbei erreicht, wodurch ein reduzierter Staudruck an dem Frontend entsteht, was beispielsweise zu Energieeffizienzvorteilen führt. Eine gattungsgemäße Kühleinrichtung ist beispielsweise aus der Offenlegungsschrift GB 2 479 044 A bekannt. Die Offenlegungsschriften DE 10 2012 109 503 A1 und DE 10 2015 010 102 A1 offenbaren jeweils eine weitere Kühleinrichtung mit einer Gitterstützstruktur und einem als Rollo ausgebildeten Schließelement.

Der Erfindung liegt die Aufgabe zugrunde, eine verbesserte Kühleinrichtung zu schaffen, die einfach gestaltet und robust ausgebildet ist, sodass sie beispielsweise auch bei hohen Fahrgeschwindigkeiten dem Staudruck standhält.

Die der Erfindung zugrundeliegende Aufgabe wird durch eine Kühleinrichtung mit den Merkmalen des Anspruchs 1 gelöst. Diese hat den Vorteil, dass das Schließelement selbst besonders gewichtssparend und vorteilhaft dichtend ausgebildet ist, und dass durch eine vorteilhafte Gestaltung des Trägerrahamens gewährleistet ist, dass eine Beschädigung des Schließelements oder der Kühleinrichtung auf einfache und sichere Art und Weise verhindert wird.

Erfindungsgemäß wird dies dadurch erreicht, dass das Schließelement als Rollo ausgebildet ist, das sich in einer ersten Endstellung über den Trägerrahmen die Durchströmungsöffnung verschließend erstreckt und in einer zweiten, aufgerollten Endstellung die Durchströmungsöffnung vollständig freigibt, und dass der Trägerrahmen eine in der Durchströmungsöffnung liegende Gitterstützstruktur mit sich kreuzenden Streben, insbesondere Vertikalstreben und Horizontalstreben, für das Rollo aufweist. Als Schließelement sieht die erfindungsgemäße Kühleinrichtung also ein Rollo vor. In der die Durchströmungsöffnung vollständig verschließenden Endstellung dichtet das Rollo die Durchströmungsöffnung dicht ab. Dies wird durch das flexible, insbesondere biegeschlaffe Rollo gewährleistet. Durch die Gitterstützstruktur wird erreicht, dass das Rollo nicht durch die Durchströmungsöffnung hindurchgedrückt werden kann, sodass die Dichtfunktion des Rollos auch bei hohem Gegenwind beziehungsweise hohem, auf das Rollo wirkenden Strömungsdruck sicher in der verschließenden Stellung erhalten bleibt. Dadurch wird sowohl das Rollo als auch der hinter dem Rollo - in Strömungsrichtung gesehen - liegende Wärmetauscher vor einer Beschädigung geschont. Wird das Rollo in die zweite Endstellung verfahren, sodass die Durchströmungsöffnung vollständig freigegeben ist, so kann der Luftstrom die Gitterstützstruktur durchströmen und zu dem Wärmetauscher gelangen. Vorteilhafterweise ist die Gitterstruktur strömungsoptimiert ausgebildet, sodass der Luftstrom die Gitterstützstruktur vorteilhaft durchströmt, insbesondere derart, dass wenige oder keine Turbulenzen auftreten. Dies wird vorzugsweise durch ein vorteilhaftes Tropfenprofil der Vertikalstreben und Horizontalstreben im Querschnitt erreicht.

Erfindungsgemäß weist die Gitterstützstruktur zumindest ein tellerförmiges Stützelement auf der von dem Rollo abgewandten Seite der Gitterstützstruktur zur Anlage an dem Wärmetauscher auf. Durch das Stützelement wird eine sichere Anlage der Gitterstützstruktur an dem Wärmetauscher für den Fall gewährleistet, dass der Strömungsdruck derart hoch ist, dass das Rollo die Gitterstützstruktur in Richtung des Wärmetauschers verformt. Durch das tellerförmige Stützelement wird gewährleistet, dass eine flächige Anlage der Gitterstützstruktur an dem Wärmetauscher erzielt wird, durch welche eine punktförmige Druckbelastung des Wärmetauschers durch die Gitterstützstruktur vermieden ist. Durch die flächige Anlage wird eine verbesserte Kraftübertragung von der Gitterstützstruktur auf den Wärmetauscher derart gewährleistet, dass eine Beschädigung des Wärmetauschers verhindert ist. Insbesondere ist das Stützelement breiter als die Streben der Gitterstützstruktur ausgebildet, um eine verbesserte Anlage an dem Wärmetauscher zu gewährleisten.

Vorzugsweise weist die Gitterstützstruktur mehrere derartiger Stützelemente auf der von dem Rollo abgewandten Seite auf, sodass sich die Gitterstützstruktur an mehreren Stellen an dem Wärmetauscher abstützen kann, ohne diesen zu beschädigen. Insbesondere weist das jeweilige Stützelement eine Anlagefläche auf, die sich über mehrere Kühlmittelkanäle des Wärmetauschers hinweg erstreckt. Insbesondere weist das jeweilige Stützelement eine kreisförmige Anlagefläche auf.

Insbesondere ist das jeweilige Stützelement an einer Kreuzungsstelle von Horizontalstreben und Vertikalstreben angeordnet, um eine optimale Kraftübertragung von der Gitterstützstruktur auf den Wärmetauscher zu gewährleisten. Besonders bevorzugt weist das jeweilige Stützelement im Längsschnitt gesehen bis zu der Anlagefläche eine strömungsoptimierte Kontur auf, sodass das jeweilige Stützelement einen möglichst geringen Strömungswiderstand bietet. Insbesondere weitet sich das jeweilige Stützelement ausgehen von der Gitterstützstruktur in Richtung der Anlagefläche kontinuierlich, insbesondere tropfenförmig auf, um die Luftströmung bei freigegebener Durchströmungsöffnung möglichst wenig zu beeinträchtigen. Die Auflagefläche des jeweiligen Stützelements ist dabei zweckmäßigerweise größer ausgebildet als die dem Wärmetauscher zugeordnete Seitenfläche der jeweiligen Horizontal- und Vertikalstrebe.

Gemäß einer bevorzugten Weiterbildung der Erfindung ist zumindest eine Horizontalstrebe und/oder Vertikalstrebe als Metallstrebe ausgebildet. Die Metallstrebe bietet eine vorteilhafte Robustheit und versteift den Trägerrahmen und die Gitterstützstruktur in vorteilhafter Weise.

Wenigstens eine Vertikalstrebe und/oder Horizontalstrebe ist außerdem bevorzugt als Kunststoffstrebe ausgebildet. Durch die Kunststoffstrebe wird das Gewicht der Vorrichtung reduziert und eine kostengünstige Herstellung ermöglicht.

Vorzugsweise ist der Trägerrahmen zumindest im Wesentlichen aus Kunststoff gefertigt und insbesondere einstückig mit zumindest einigen der Kunststoffstreben ausgebildet. Dadurch ergibt sich ein hochintegrales Bauteil, das eine einfache Montage bei geringem Gewicht erlaubt. Durch die einstückige Ausbildung wird außerdem die Robustheit der Vorrichtung erhöht.

Gemäß einer bevorzugten Ausführungsform der Erfindung ist zumindest eine Metallstrebe von dem Kunststoff des Trägerrahmens und/oder einer Kunststoffstrebe zumindest abschnittsweise umgeben, insbesondere umspritzt. Dadurch ist eine vorteilhafte Integration der Metallstrebe in die Vorrichtung gewährleistet.

Vorzugsweise weist zumindest eine Metallstrebe wenigstens ein Durchbruch auf, durch welchen sich das Kunststoffmaterial einer Kunststoffstrebe und/oder des Trägerrahmens hindurch erstreckt. Dadurch ist eine vorteilhafte formschlüssige Verbindung von Metallstrebe und Kunststoffmaterial des Trägerrahmens und/oder der Kunststoffstrebe gewährleistet. Besonders bevorzugt erstreckt sich das Material einer Kunststoffstrebe, die sich senkrecht zur Metallstrebe erstreckt im Kreuzungsbereich durch den Durchbruch der Metallstrebe hindurch, um eine besonders feste Verbindung zu gewährleisten.

Weiterhin ist bevorzugt vorgesehen, dass zumindest ein tellerförmiges Stützelement im Bereich des Durchbruchs einer Horizontalstrebe angeordnet ist. Dadurch bietet das Stützelement einen vorteilhaften Kraftfluss durch die Gitterstützstruktur zu dem Stützelement und gegebenenfalls auch dem Wärmetauscher. Es wird eine sichere Ablage und ein Schutz sowohl für den Wärmetauscher wie auch für die Gitterstützstruktur vorteilhaft gewährleistet.

Bevorzugt ist das jeweilige Stützelement einstückig mit einer Kunststoffstrebe der Gitterstützstruktur ausgebildet. Dadurch ist eine kostengünstige Herstellung und Montage des Stützelements an der Gitterstützstruktur geboten. Insbesondere wird das Stützelement mit der Kunststoffstrebe mitgeformt und insbesondere direkt an einer Metallstrebe mitangeformt, um einen sicheren Halt und eine vorteilhafte Verbindung von Stützelement und Metallstrebe, insbesondere im Bereich des Durchbruchs, zu gewährleisten.

Weiterhin weisen zumindest einige der mehreren Stützelemente bevorzugt unterschiedlich große Auflageflächen für den Wärmetauscher auf. Dadurch sind die Auflageflächen beispielsweise an die Konstruktion des Wärmetauschers angepasst, um optimale Anlagestellen beziehungsweise Kontaktbereiche zu gewährleisten. Optional sind die Anlageflächen auch in Abhängigkeit von dem Luftstrom derart gewählt, dass der Luftstrom insgesamt vorteilhaft auf den Wärmetauscher verteilt beziehungsweise gelenkt wird.

Weiterhin ist bevorzugt vorgesehen, dass auf der von dem Klimakondensator abgewandten Seite der Vorrichtung ein Wasserkühler mit luftumströmbaren Kühlwasserkanälen angeordnet ist. Damit liegt die Vorrichtung zwischen dem Wasserkühler und dem Wärmetauscher, der insbesondere als Klimakondensator ausgebildet ist, sodass der Luftstrom erst nach Durchströmen des Wasserkühlers die Durchströmungsöffnung durchströmen und dem Wärmetauscher beziehungsweise Klimakondensator zugeführt wird. Es ergibt sich hierdurch eine besonders kompakte Bauweise der Kühleinrichtung mit einer vorteilhaften Führung des Rollos zwischen Klimakondensator und Wasserkühler.

Weiterhin ist bevorzugt vorgesehen, dass das Rollo eine Wickelrolle aufweist, die an dem Trägerrahmen drehbar gelagert ist. Damit ist das Rollo an dem Trägerrahmen selbst gehalten und mittels der Wickelrolle auf- und abrollbar, um die Durchströmungsöffnung freizugeben oder zu verschließen. Durch die Anordnung des Rollos an dem Trägerrahmen selbst ist eine einfache Montage der Kühleinrichtung, insbesondere eine vorteilhafte Vormontage der Vorrichtung gewährleistet.

Das erfindungsgemäße Kraftfahrzeug mit den Merkmalen des Anspruchs 14 zeichnet sich durch die erfindungsgemäße Kühleinrichtung aus. Es ergeben sich hierdurch die bereits genannten Vorteile.

Weitere Vorteile und bevorzugte Merkmale ergeben sich aus dem zuvor Beschriebenen sowie aus den Ansprüchen. Im Folgenden soll die Erfindung anhand der Zeichnung näher erläutert werden. Dazu zeigen
- Figur 1: eine Kühleinrichtung eines Kraftfahrzeugs in einer vereinfachten Seitendarstellung,
- Figur 2: die Kühleinrichtung in einer vereinfachten Explosionsdarstellung,
- Figur 3: ein Trägerrahmen der Kühleinrichtung in einer perspektivischen Darstellung,
- Figur 4: eine perspektivische Detailansicht des Trägerrahmens und
- Figur 5: eine Schnittdarstellung durch den vorteilhaften Trägerrahmen.

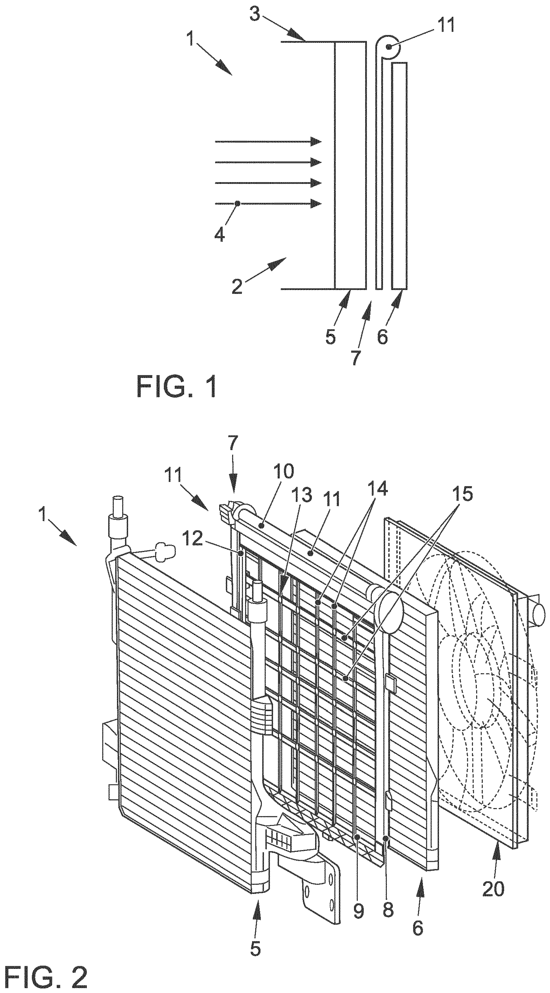

Figur 1 zeigt in einer vereinfachten Seitendarstellung eine vorteilhafte Kühleinrichtung 1, die einer Lufteinlassöffnung 2 eines Frontends eines hier nur angedeuteten Kraftfahrzeugs 3 zugeordnet ist. Die Kühleinrichtung 1 erstreckt sich über die Lufteinlassöffnung 2, sodass Fahrtwind, wie er durch Pfeile 4 in Figur 1 angedeutet ist, die Kühleinrichtung 1 durchströmt, bevor er beispielsweise in den Motorraum des Kraftfahrzeugs 3 gelangt.

Die Kühleinrichtung 1 weist gemäß dem vorliegenden Ausführungsbeispiel einen Wasserkühler 5 mit einer Vielzahl von mit Kühlwasser durchströmbaren Kühlwasserkanälen auf, einen Klimakondensator 6, der eine Vielzahl von Kühlmittelkanälen aufweist, durch welche ein Kühlmittel führbar ist, sowie eine Vorrichtung 7, die in Strömungsrichtung zwischen dem Wasserkühler 5 und dem Klimakondensator 6 angeordnet ist, und dazu dient, den Luftstrom durch die Kühleinrichtung 1 zu beeinflussen.

Figur 2 zeigt eine perspektivische Explosionsdarstellung der Kühleinrichtung 1. Optional weist die Kühleinrichtung 1 außerdem einen Lüfter 20 auf, der in Strömungsrichtung hinter dem Klimakondensator 6 liegt und zumindest ein antreibbares Lüfterrad zum Erzeugen eines Luftstroms bei ausbleibendem Fahrtwind aufweist.

Die Vorrichtung 7 weist einen Trägerrahmen 8 auf, der eine Durchströmungsöffnung 9, durch welche der Luftstrom zu dem Klimakondensator 6 führbar ist, aufweist. Der Trägerrahmen 8 trägt außerdem ein Rollo 10, das auf einer an einer Oberseite des Trägerrahmens 8 drehbar gelagerten Wickelrolle 11 aufrollbar und von dieser derart abrollbar ist, dass sich das Rollo 10 vollständig entlang des Trägerrahmens 8 die Durchströmungsöffnung 9 überdeckend und damit verschließend erstreckt. Das Rollo 10 ist somit aus einem flexiblen, insbesondere biegeschlaffen Material gefertigt, beispielsweise aus einem Textil, sodass es die Durchströmungsöffnung 9 sicher und insbesondere dicht verschließt. Dabei ist das Rollo 10 beispielsweise in seitlichen Führungsnuten 12 des Trägerrahmens 8 beidseitig geführt.

Um ein Verformen des Rollos in die Durchströmungsöffnung 9 verschließenden Zustand zu verhindern, weist der Trägerrahmen 8 eine Gitterstützstruktur 13 auf, die sich über die Durchströmungsöffnung 9 erstreckt und stromabwärts des Rollos 10 im abgerollten Zustand liegt, sodass das Rollo bei Fahrtwind gegen die Gitterstützstruktur 13 gedrückt wird. Die Gitterstützstruktur 13 weist Vertikalstreben 14 auf, die sich also bei bestimmungsgemäßem Gebrauch vertikal erstrecken, sowie die Vertikalstreben 14 kreuzende Horizontalstreben 15, die sich bei bestimmungsgemäßem Gebrauch beziehungsweise Verbau der Kühleinrichtung 1 horizontal erstrecken. Gemäß einem alternativen, hier nicht dargestellten Ausführungsbeispiel können die Streben auch derart schräg liegend ausgebildet oder angeordnet sein, dass sich ein Rautenmuster ergibt. Auch andere Arten und Ausrichtungen der Streben zueinander können wirksam sein.

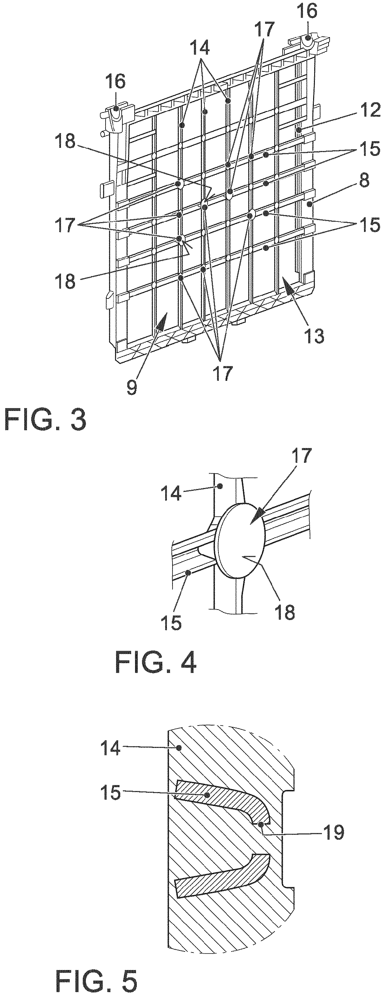

Figur 3 zeigt in einer perspektivischen Darstellung einen Trägerrahmen 8 mit der Gitterstützstruktur 13 mit Blick auf die dem Klimakondensator 6 zugewandten Rückseite des Trägerrahmens 8. Dabei ist der Trägerrahmen 8 ohne das Rollo 10 dargestellt, wobei an dem oberen Ende Lageraufnahmen 16 für die Antriebswelle die Wickelrolle 11 des Rollos 10 ausgebildet sind.

Gemäß dem vorliegenden Ausführungsbeispiel sind zumindest die meisten der Horizontalstreben 15 aus Metall, insbesondere aus Stahl gefertigt. Die übrigen Streben, insbesondere die Vertikalstreben 14 sowie der Trägerrahmen 8 selbst sind vorliegend aus Kunststoff gefertigt. Insbesondere sind die Vertikalstreben 14 und der Trägerrahmen 8 einstückig miteinander ausgebildet. Insbesondere sind die Horizontalstreben 15 beziehungsweise die Stahlstreben oder Metallstreben in den Trägerrahmen 8 und die Vertikalstreben 14 durch Umspritzen mit dem Kunststoffmaterial integriert. Vorteilhafterweise sind die aus Metall gefertigten Horizontalstreben 15 in dem Trägerrahmen 8 endseitig integriert beziehungsweise von dem Material des Trägerrahmens 8 umspritzt.

An manchen der Kreuzungsstellen, an welchen die Vertikalstreben 14 die Horizontalstreben 15 kreuzen, weist die Gitterstützstruktur 13 tellerförmige Stützelemente 17 auf, die auf der dem Rollo 10 abgewandten Seite, also dem Klimakondensator 6 zugewandt, angeordnet sind. Die Stützelemente 17 sind unterschiedlich groß ausgebildet und weisen jeweils eine Anlagefläche 18 auf, von denen hier aus Übersichtlichkeitsgründen einige mit Bezugszeichen versehen sind. Die Anlageflächen 18 liegen vorteilhafterweise in einer gemeinsamen Ebene und sind jeweils derart groß ausgebildet, dass sie sich über mehrere Kühlmittelkanäle des Klimakondensators 6 hinweg erstrecken.

Die Stützelemente dienen dazu, bei hohem Fahrtwind, der gegen das Rolle und/oder die Gitterstützstruktur 13 wirkt, die Gitterstützstruktur 13 an dem dahinterliegenden Klimakondensator 6 abzustützen. Durch die vorteilhafte Größe der Anlageflächen 18 ist gewährleistet, dass die Anpresskraft auf eine vergrößerte Fläche verteilt wird und damit die Kühlkanäle des Klimakondensators 6 vor Beschädigungen, insbesondere durch die aus Metall gefertigten Horizontalstreben 15, geschützt sind.

Figur 4 zeigt in einer vergrößerten perspektivischen Darstellung eine Kreuzungsstelle, in welcher eine Vertikalstrebe 14 eine Horizontalstrebe 15 kreuzt. Das Kunststoffmaterial der Vertikalstrebe 14 ist dabei um die Horizontalstrebe 15 herum gespritzt, sodass die Vertikalstrebe 15 sicher in die Gitterstützstruktur 13 mit den Vertikalstreben 14 integriert ist.

Figur 5 zeigt anhand einer Längsschnittdarstellung entlang der Vertikalstrebe 14 aus Figur 4, dass die Horizontalstrebe 15 im Bereich der Kreuzungsstelle außerdem einen Durchbruch 19 aufweist, durch welchen das Kunststoffmaterial der Vertikalstrebe 14 hindurchdringt, sodass die Horizontalstrebe 15 einerseits vollständig von dem Material der Vertikalstrebe 14 umschlossen ist, und andererseits von dem Material auch durchdringt wird. Dadurch ist eine besonders feste Verbindung von Horizontalstreben 15 und Vertikalstreben 14 gewährleistet. Insbesondere im Bereich der Kreuzungsstelle, ist, wie in Figur 4 gezeigt, eines der Stützelemente 17 angeordnet.

Dadurch befindet sich das Stützelement 17 in einem besonders vorteilhaften Bereich der Gitterstützstruktur 13 und gewährleistet bei Bedarf eine vorteilhafte Kraftübertragung auf den Wärmetauscher beziehungsweise den Klimakondensator 6. Während gemäß dem vorliegenden Ausführungsbeispiel die Stützelemente 17 kreisförmig ausgebildet sind beziehungsweise eine kreisförmige Anlagefläche 18 aufweisen, ist die Ausbildung der Stützelemente 17 grundsätzlich nicht auf diese Kreisform beschränkt. Vielmehr kann das jeweilige Stützelement 17 auch quadratisch, dreiecksförmig, mehreckförmig oder oval ausgebildet sein.

Vorteilhafterweise sind die aus Metall gefertigten Stützstreben 15 im Querschnitt V-förmig oder U-förmig ausgebildet, wobei die V- oder U-Form in die Richtung des Klimakondensators 6, also von dem Rollo 10 weg, geöffnet ist, um eine vorteilhafte Robustheit der Gitterstützstruktur 13 zu gewährleisten.

Durch die vorteilhafte Ausbildung des Trägerrahmens 8 mit der Gitterstützstruktur 13 ist eine kompakte Vormontageeinheit sowie eine kompakte Ausbildung der Vorrichtung 7 insgesamt geboten, die eine einfache und kostengünstige Herstellung und Montage der Kühleinrichtung 1 erlaubt.

### Bezugszeichenliste

- 1: Kühleinrichtung
- 2: Lufteinlassöffnung
- 3: Kraftfahrzeug
- 4: Pfeil
- 5: Wasserkühler
- 6: Klimakondensator
- 7: Vorrichtung
- 8: Trägerrahmen
- 9: Durchströmungsöffnung
- 10: Rollo
- 11: Wickelrolle
- 12: Führungsnut
- 13: Gitterstützstruktur
- 14: Vertikalstrebe
- 15: Horizontalstrebe
- 16: Lageraufnahme
- 17: Stützelement
- 18: Anlagefläche
- 19: Durchbruch
- 20: Lüfter

## Patentansprüche

1. Kühleinrichtung (1) für ein Frontend eines Kraftfahrzeugs (3), mit zumindest einem Wärmetauscher, der eine Vielzahl von luftumströmbaren Kühlmittelkanälen aufweist, und mit einer dem Wärmetauscher vorgeschalteten Vorrichtung (7), die einen Trägerrahmen (8,9) mit einer Durchströmungsöffnung (9) für einen Luftstrom zu dem Wärmetauscher und zumindest ein an dem Trägerrahmen (8) beweglich gelagertes Schließelement zum Freigeben, teilweise Freigeben und Verschließen der Durchströmungsöffnung (9) aufweist, wobei das Schließelement als Rollo (10) ausgebildet ist, das sich in einer ersten Endstellung über den Trägerrahmen (8) die Durchströmungsöffnung (9) verschließend erstreckt und in einer zweiten, aufgerollten Endstellung die Durchströmungsöffnung (9) vollständig freigibt, und wobei der Trägerrahmen (8) eine in der Durchströmungsöffnung (9) liegende Gitterstützstruktur (13) mit sich kreuzenden Streben, insbesondere Vertikalstreben (14) und Horizontalstreben (15), für das Rollo (10) aufweist, **dadurch gekennzeichnet, dass** die Gitterstützstruktur (13) zumindest ein tellerförmiges Stützelement (17) auf der von dem Rollo (10) abgewandten Seite der Gitterstützstruktur (13) zur Anlage an dem Wärmetauscher, insbesondere Klimakondensator (6), aufweist.

2. Kühleinrichtung nach Anspruch 1, **dadurch gekennzeichnet, dass** die Gitterstützstruktur (13) mehrere tellerförmige Stützelement (17) auf der von dem Rollo (10) abgewandten Seite der Gitterstützstruktur (13) zur Anlage an dem Wärmetauscher, insbesondere Klimakondensator (6) aufweist.

3. Kühleinrichtung nach einem der vorhergehenden Ansprüche, **dadurch gekennzeichnet, dass** das jeweilige Stützelement (17) an einer Kreuzungsstelle von einer Horizontalstrebe (15) und einer Vertikalstrebe (14) angeordnet ist.

4. Kühleinrichtung nach einem der vorhergehenden Ansprüche, **dadurch gekennzeichnet, dass** zumindest eine Horizontalstrebe (15) und/oder Vertikalstrebe (14) als Metallstrebe ausgebildet ist.

5. Kühleinrichtung nach einem der vorhergehenden Ansprüche, **dadurch gekennzeichnet, dass** zumindest eine Vertikalstrebe (14) und/oder Horizontalstrebe (15) als Kunststoffstrebe ausgebildet ist.

6. Kühleinrichtung nach einem der vorhergehenden Ansprüche, **dadurch gekennzeichnet, dass** der Trägerrahmen (8) zumindest im Wesentlichen aus Kunststoff gefertigt, und insbesondere einstückig mit zumindest einer Kunststoffstrebe ausgebildet ist.

7. Kühleinrichtung nach einem der vorhergehenden Ansprüche, **dadurch gekennzeichnet, dass** zumindest eine Metallstrebe von dem Kunststoff des Trägerrahmens (8) und/oder einer Kunststoffstrebe zumindest abschnittsweise umgeben, insbesondere umspritzt ist.

8. Kühleinrichtung nach einem der vorhergehenden Ansprüche, **dadurch gekennzeichnet, dass** die zumindest eine Metallstrebe wenigstens einen Durchbruch (19) aufweist, durch welchen sich das Kunststoffmaterial hindurch erstreckt.

9. Kühleinrichtung nach Anspruch 8, **dadurch gekennzeichnet, dass** zumindest ein tellerförmiges Stützelement (17) im Bereich des Durchbruchs (19) an der Metallstrebe angeordnet ist.

10. Kühleinrichtung nach einem der vorhergehenden Ansprüche, **dadurch gekennzeichnet, dass** das jeweilige Stützelement (17) einstückig mit einer Kunststoffstrebe der Gitterstützstruktur (13) ausgebildet ist.

11. Kühleinrichtung nach einem der Ansprüche 2 bis 10, **dadurch gekennzeichnet, dass** zumindest einige der mehreren Stützelemente (17) unterschiedlich große Auflageflächen für den Wärmetauscher aufweisen.

12. Kühleinrichtung nach einem der vorhergehenden Ansprüche, **dadurch gekennzeichnet, dass** auf der von dem Klimakondensator abgewandten Seite der Vorrichtung (7) ein Wasserkühler (5) mit luftumströmbaren Kühlwasserkanälen angeordnet ist.

13. Kühleinrichtung nach einem der vorhergehenden Ansprüche, **dadurch gekennzeichnet, dass** das Rollo (10) eine Wickelrolle (11) aufweist, die an dem Trägerrahmen (8) drehbar gelagert ist.

14. Kraftfahrzeug mit einer Lufteinlassöffnung (2) an einem Frontend, **gekennzeichnet durch** eine der Lufteinlassöffnung (2) zugeordneten Kühleinrichtung (1) gemäß einem der Ansprüche 1 bis 13.

## Claims

1. Cooling appliance (1) for a front end of a motor vehicle (3), comprising at least one heat exchanger which has a plurality of coolant channels around which air can flow, and also comprising a device (7) upstream of the heat exchanger, which device has a support frame (8, 9) comprising a throughflow opening (9) for an air flow to the heat exchanger, and has at least one closing element, movably mounted on the support frame (8), for releasing, partially releasing and closing the throughflow opening (9), the closing element being designed as a roller blind (10) which extends over the support frame (8), closing the throughflow opening (9), in a first end position, and completely releases the throughflow opening (9) in a second, rolled-up end position, and the support frame (8) having a lattice support structure (13) which lies in the throughflow opening (9), the lattice support structure comprising intersecting struts, in particular vertical struts (14) and horizontal struts (15), for the roller blind (10),**characterized in that** the lattice support structure (13) has at least one plate-shaped support element (17) on the side of the lattice support structure (13) which faces away from the roller blind (10), for contact with the heat exchanger, in particular an air conditioning condenser (6).

2. Cooling appliance according to claim 1, **characterized in that** the lattice support structure (13) has a plurality of plate-shaped support elements (17) on the side of the lattice support structure (13) which faces away from the roller blind (10), for contact with the heat exchanger, in particular the air conditioning condenser (6).

3. Cooling appliance according to any of the preceding claims,
**characterized in that** the relevant support element (17) is arranged at an intersection of a horizontal strut (15) and a vertical strut (14).

4. Cooling appliance according to any of the preceding claims,
**characterized in that** at least one horizontal strut (15) and/or vertical strut (14) is formed as a metal strut.

5. Cooling appliance according to any of the preceding claims,
**characterized in that** at least one vertical strut (14) and/or horizontal strut (15) is formed as a plastics strut.

6. Cooling appliance according to any of the preceding claims, **characterized in that** the support frame (8) is made at least substantially of plastics material, and in particular is formed integrally with at least one plastics strut.

7. Cooling appliance according to any of the preceding claims,
**characterized in that** at least one metal strut is at least partially surrounded, in particular overmolded, by the plastics of the support frame (8) and/or by a plastics strut.

8. Cooling appliance according to any of the preceding claims, **characterized in that** the at least one metal strut has at least one aperture (19) through which the plastics material extends.

9. Cooling appliance according to claim 8, **characterized in that** at least one plate-shaped support element (17) is arranged in the region of the aperture (19) on the metal strut.

10. Cooling appliance according to any of the preceding claims,
**characterized in that** the relevant support element (17) is formed integrally with a plastics strut of the lattice support structure (13).

11. Cooling appliance according to any of claims 2 to 10, **characterized in that** at least some of the plurality of support elements (17) have differently sized contact surfaces for the heat exchanger.

12. Cooling appliance according to any of the preceding claims,
**characterized in that** a water cooler (5) comprising cooling water channels around which air can flow is arranged on the side of the device (7) which faces away from the air conditioning condenser.

13. Cooling appliance according to any of the preceding claims,
**characterized in that** the roller blind (10) has a winding roller (11) which is rotatably mounted on the support frame (8).

14. Motor vehicle which has an air inlet opening (2) at a front end, **characterized by** a cooling appliance (1) according to any of claims 1 to 13 associated with the air inlet opening (2).

## Revendications

1. Appareil de refroidissement (1) pour une partie avant d'un véhicule automobile (3), comportant au moins un échangeur de chaleur qui présente une pluralité de canaux d'agent de refroidissement pouvant être parcourus par de l'air, et comportant un dispositif (7) monté en amont de l'échangeur de chaleur, qui présente un cadre de support (8, 9) comportant une ouverture de passage (9) pour un flux d'air vers l'échangeur de chaleur et au moins un élément de fermeture monté de manière mobile sur le cadre de support (8) pour la libération, la libération partielle et la fermeture de l'ouverture de passage (9), dans lequel l'élément de fermeture est réalisé sous forme de store enrouleur (10), qui, dans une première position d'extrémité, s'étend au-dessus du cadre de support (8) en fermant l'ouverture de passage (9) et, dans une seconde position d'extrémité enroulée, libère complètement l'ouverture de passage (9), et dans lequel le cadre de support (8) présente une structure de soutien en treillis (13) située dans l'ouverture de passage (9) et comportant des entretoises qui se croisent, en particulier des entretoises verticales (14) et des entretoises horizontales (15), pour le store enrouleur (10),
**caractérisé en ce que** la structure de soutien en treillis (13) présente au moins un élément de soutien (17) en forme de plateau sur le côté de la structure de soutien en treillis (13) opposé au store enrouleur (10) pour l'appui sur l'échangeur de chaleur, en particulier le condenseur de climatisation (6).

2. Appareil de refroidissement selon la revendication 1, **caractérisé en ce que** la structure de soutien en treillis (13) présente plusieurs éléments de soutien (17) en forme de plateaux sur le côté de la structure de soutien en treillis (13) opposé au store enrouleur (10) pour l'appui sur l'échangeur de chaleur, en particulier le condenseur de climatisation (6).

3. Appareil de refroidissement selon l'une des revendications précédentes,
**caractérisé en ce que** l'élément de soutien (17) respectif est disposé au niveau d'un point d'intersection d'une entretoise horizontale (15) et d'une entretoise verticale (14).

4. Appareil de refroidissement selon l'une des revendications précédentes,
**caractérisé en ce qu'**au moins une entretoise horizontale (15) et/ou une entretoise verticale (14) est réalisée sous forme d'entretoise métallique.

5. Appareil de refroidissement selon l'une des revendications précédentes,
**caractérisé en ce qu'**au moins une entretoise verticale (14) et/ou une entretoise horizontale (15) est réalisée sous forme d'entretoise en matière plastique.

6. Appareil de refroidissement selon l'une des revendications précédentes,
**caractérisé en ce que** le cadre de support (8) est fabriqué au moins sensiblement en matière plastique, et est en particulier réalisé d'une seule pièce avec au moins une entretoise en matière plastique.

7. Appareil de refroidissement selon l'une des revendications précédentes,
**caractérisé en ce qu'**au moins une entretoise métallique est entourée, en particulier surmoulée, au moins par sections, par la matière plastique du cadre de support (8) et/ou d'une entretoise en matière plastique.

8. Appareil de refroidissement selon l'une des revendications précédentes,
**caractérisé en ce que** l'au moins une entretoise métallique présente au moins une percée (19) à travers laquelle s'étend la matière plastique.

9. Appareil de refroidissement selon la revendication 8, **caractérisé en ce qu'**au moins un élément de soutien (17) en forme de plateau est disposé dans la zone de la percée (19) sur l'entretoise métallique.

10. Appareil de refroidissement selon l'une des revendications précédentes,
**caractérisé en ce que** l'élément de soutien (17) respectif est réalisé d'un seul tenant avec une entretoise en matière plastique de la structure de soutien en treillis (13).

11. Appareil de refroidissement selon l'une des revendications 2 à 10,
**caractérisé en ce qu'**au moins certains des plusieurs éléments de soutien (17) présentent des surfaces d'appui de tailles différentes pour l'échangeur de chaleur.

12. Appareil de refroidissement selon l'une des revendications précédentes,
**caractérisé en ce que** sur le côté du dispositif (7) opposé au condenseur de climatisation est disposé un refroidisseur d'eau (5) comportant des canaux d'eau de refroidissement pouvant être parcourus par de l'air.

13. Appareil de refroidissement selon l'une des revendications précédentes,
**caractérisé en ce que** le store enrouleur (10) présente un rouleau d'enroulement (11) monté de manière à pouvoir tourner sur le cadre support (8).

14. Véhicule automobile comportant une ouverture d'entrée d'air (2) sur une extrémité avant, **caractérisé par** un appareil de refroidissement (1) selon l'une des revendications 1 à 13 associé à l'ouverture d'entrée d'air (2).
